# EUROPÄISCHE PATENTANMELDUNG

(11) **EP 2 757 019 A2**
(43) Veröffentlichungstag der Anmeldung: **23.07.2014**
(21) Anmeldenummer: 14150340.9
(22) Anmeldetag: 07.01.2014
(51) Int. Cl.: B62B 1/06, B62B 5/00

(54) **Flurförderzeug für Paletten**

(30) Priorität: 17.01.2013 DE 102013100449
(71) Anmelder: Früchtenicht, Hans-Dieter, 25436 Neuendeich (DE)
(72) Erfinder: Früchtenicht, Hans-Dieter, 25436 Neuendeich (DE)
(74) Vertreter: Straube, Urs Norman

(57) **Zusammenfassung**

Die Erfindung betrifft ein Flurförderzeug (1) für Paletten (2). Damit Paletten (2) auf einfache Weise über kürzere Distanzen transportiert werden können, wird vorgeschlagen, dass das Flurförderzeug (1) eine Achse (3) und mindestens ein Auflageelement (4) umfasst, welches an seinem vorderen, der Achse (3) abgewandten Ende eine Erhebung (5) aufweist, und das weiterhin eine Hebelvorrichtung (6) vorgesehen ist, welche ausgebildet ist, beim Anlegen einer Zugkraft das oder die Auflageelemente (4) nach oben und das Flurförderzeug (1) in Zugkraftrichtung (18) zu bewegen.

## Beschreibung

### Gebiet der Erfindung

Die Erfindung betrifft ein Flurförderzeug für Paletten. Paletten sind flache Tragvorrichtungen, zumeist aus Holz, die zum Stapeln von Waren und deren anschließendem Transport verwendet werden. Flurförderzeuge für Paletten sind Mittel zum horizontalem Transport der Paletten mit den gestapelten Waren.

### Hintergrund der Erfindung

Für den Transport von beladenen Paletten von einem Lastkraftwagen in einen Lagerraum werden in der Regel Gabelstapler verwendet. Diese fahren mit ihren Gabeln unter die Paletten, heben sie an und transportieren sie an ihren Bestimmungsort. Hierzu ist es notwendig, mit dem Gabelstapler unmittelbar an die Paletten heranzufahren, um sie mit den Gabeln sicher aufnehmen und transportieren zu können.

Die Ladefläche eines Lastkraftwagens liegt normalerweise erheblich höher als der Boden. Befinden sich die Paletten auf der Ladefläche eines Lastkraftwagens, dann kann der Gabelstapler, jedenfalls ebenerdig, nur dann dicht genug an eine Palette heranfahren, wenn diese sich dicht an der Ladekante befindet.

Es gibt zwar Lagerhäuser mit Laderampen, die auf einer Ebene mit der Ladefläche des Lastkraftwagens angeordnet sind und die ein Befahren der Ladefläche mit dem Gabelstapler erlauben, allerdings stehen diese Vorrichtungen nicht immer zur Verfügung.

Befindet sich die Palette dann weit von der Ladekante entfernt, dann muss die Palette auf der Ladefläche erst an die Ladekante transportiert werden, um für den Gabelstapler zugänglich zu sein. Dieses ist schwierig und aufwändig, da beladene Paletten ein Gewicht von bis zu 1000 kg erreichen können.

### Zusammenfassung der Erfindung

Die vorliegende Erfindung wurde vor dem Hintergrund des vorstehend beschriebenen Stands der Technik entwickelt. Aufgabe der Erfindung ist es daher, ein Flurförderzeug vorzuschlagen, durch das Paletten auf einfache Weise auf der Ladefläche transportiert werden können.

Diese Aufgabe wird erfindungsgemäß mittels eines Flurförderzeugs für Paletten gelöst, dass eine Achse und mindestens ein Auflageelement umfasst, welches an seinem vorderen, der Achse abgewandten Ende eine Erhebung aufweist, und dass weiterhin eine Hebelvorrichtung vorgesehen ist, welche ausgebildet ist, beim Anlegen einer Zugkraft das oder die Auflageelemente nach oben und das Flurförderzeug in Zugkraftrichtung zu bewegen. Zur Benutzung wird das Flurförderzeug mit dem oder den Auflageelementen unter die zu transportierende Palette geschoben. Dies können beispielsweise Euro-Paletten oder Bier-Paletten sein. Die Auflageelemente sind mindestens so lang, dass sie den randständigen Querbalken der Palette mit der Erhebung umgreifen können. Wird nun eine Zugkraft an die Hebelvorrichtung angelegt, dann bewegen sich die Auflageelemente nach oben, verhaken sich formschlüssig mit der Palette und heben diese im Bereich der Auflageelemente leicht an, so dass die Palette nur noch mit dem nicht angehobenen Teil auf der Ladefläche aufliegt. Hierdurch verringert sich der Reibungswiderstand. Durch weiteres Ausüben der Zugkraft auf die Hebelvorrichtung wird die Palette an die gewünschte Position, also beispielsweise an die Ladekante, gezogen. Beim Nachlassen der Zugkraft senkt sich der angehobene Teil der Palette wieder ab. Die Zugkraft kann vorteilhafterweise durch einen Gabelstapler erzeugt werden, der mit der Hebelvorrichtung verbunden wird und in Zugkraftrichtung fährt.

Vorteilhafte Ausgestaltungen der Erfindung mit zusätzlichen Merkmalen werden nachfolgend beschrieben.

Die Hebelvorrichtung kann mit ihrem einen Ende an der Achse befestigt und an ihrem anderen Ende ein Befestigungsmittel für eine Zugvorrichtung aufweisen.

An der Achse können zwei Räder drehbar befestigt sein, damit das Flurförderzeug leicht bewegt werden kann. Statt der Räder können auch Rollen oder eine Walze vorgesehen sein.

Es hat sich gezeigt, dass es besonders vorteilhaft ist, wenn die Hebelvorrichtung im Verhältnis zur Auflagefläche eines Auflageelementes einen Winkel aufweist, der mindestens 90 Grad, vorzugsweise größer als 90 Grad ist. Hierdurch ist das Verhältnis von einwirkender Hebelkraft und Zugkraft besonders günstig.

Wenn zwei durch einen Zwischenraum beabstandete Auflageelemente vorgesehen sind, die vorzugsweise an der Achse befestigt sind, kann die Palette besonders sicher angehoben und transportiert werden.

Wenn die Erhebung jeweils als parallel zu Achse verlaufende Leiste ausgebildet ist, wird die Palette sicher umgriffen und festgehalten.

Die Hebelvorrichtung umfasst mindestens einen, vorzugsweise zwei Holme, die vorzugsweise miteinander verbunden sind und mit der Achse eine etwa dreieckige Form bilden. Hierdurch ist eine stabile Form sichergestellt.

Als bevorzugtes Befestigungsmittel für die Zugvorrichtung ist eine Öse vorgesehen, die an dem der Achse entgegengesetzten Ende der Hebelvorrichtung befestigt ist.

Als Zugvorrichtung ist an der Öse eine Kette befestigt. Geeignet ist auch ein reißfestes Stahlseil.

Gegenüber den Auflageelementen an der Achse ist eine Schubstange befestigt, um das Flurförderzeug unter die Palette fahren zu können. Die Schubstange ist lösbar ausgebildet, so dass das Flurförderzeug mit abmontierter Schubstange nur einen geringen Platzbedarf hat und zum Beispiel in der Fahrerkabine eines Lastkraftwagens mitgenommen werden kann.

### Kurze Beschreibung der Zeichnungen:

- Figur 1: eine perspektivische Ansicht des Flurförderzeugs;
- Figur 2: eine perspektivische Ansicht des Flurförderzeugs, das unter eine Palette geschoben ist;
- Figur 3: eine perspektivische seitliche Untersicht des Flurfiörderzeugs mit Palette; und
- Figur 4: eine perspektivische Seitenansicht des Flurförderzeugs mit angehobener Palette.

Funktionsmäßig gleiche Teile sind mit denselben Bezugszeichen versehen.

### Detaillierte Beschreibung der Erfindung

Nachfolgend wird eine beste Ausführungsform der Erfindung unter Bezugnahme auf die Zeichnungen detailliert beschrieben, wobei weitere vorteilhafte Merkmale den Figuren der Zeichnung zu entnehmen sind.

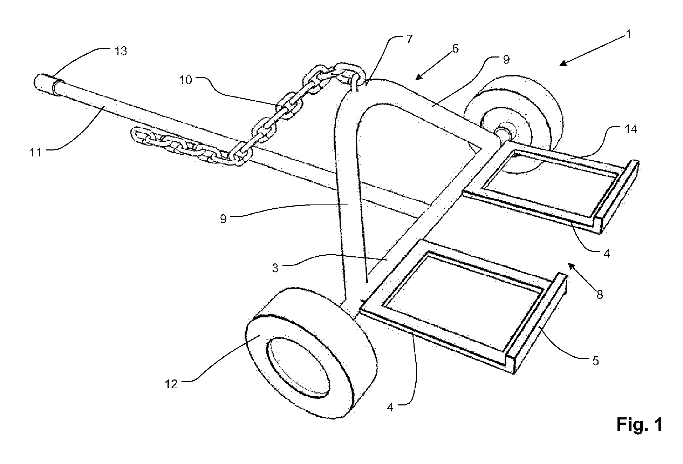

Figur 1 zeigt eine perspektivische Ansicht des Flurförderzeugs 1. Dieses dient dazu, Paletten 2 über kürzere Distanzen zu bewegen, beispielsweise auf der Ladefläche eines Lastkraftwagens, um sie anschließend zu transportieren.

Das gezeigte Flurförderzeug 1 umfasst eine horizontal angeordnete Achse 3 mit zwei drehbaren Rädern 12. An der Achse 3 sind zwei Auflageelemente 4 befestigt, die beabstandet sind und so einen Zwischenraum 8 bilden. Die Auflageelemente 4 weisen eine Auflagefläche 14 für die Paletten 2 auf. Auf dem vorderen Bereich der Auflagefläche 14 ist jeweils eine Leiste 5 befestigt, die eine nach oben weisende Erhebung bildet.

Ebenfalls an der Achse 3 sind zwei nach oben weisende Holme 9 befestigt, die sich zur Achsenmitte hin erstrecken und verbunden sind, so dass die Holme 9 und die Achse 3 die Form eines etwa gleichschenkligen Dreiecks bilden. Im Verhältnis zu den Auflageflächen 14 bzw. zu der von Ihnen aufgespannten Ebene ist der Winkel der von den Holmen 9 gebildeten Hebelvorrichtung 6 größer als 90 Grad.

Am oberen Ende der beiden Holme 9 ist eine Öse 7 angeordnet, an der eine Kette 10 befestigt ist. Die Kette 7 dient als Zugvorrichtung für das Flurförderzeug 1. Die Kette 7 kann beispielsweise mit einem (nicht gezeigten) Gabelstapler verbunden werden, der das Flurförderzeug 1 zieht.

Weiterhin ist an der Achse 3 eine Schubstange 11 mit einem Handgriff 13 befestigt. Hierdurch kann das Flurförderzeug 1 bewegt und unter eine Palette 2 gefahren werden.

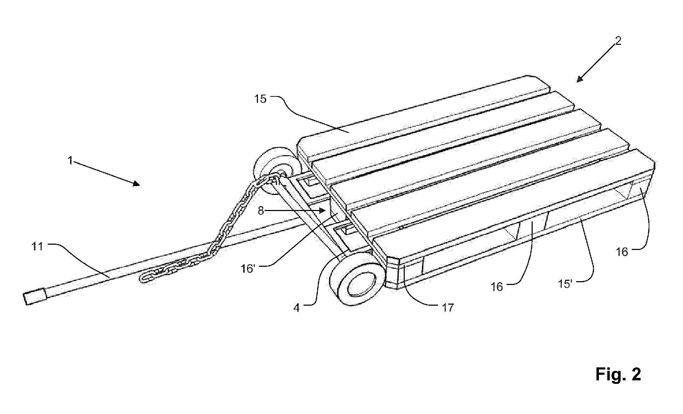

Figur 2 zeigt eine perspektivische Ansicht des Flurförderzeugs 1, das unter eine Euro-Palette 2 geschoben ist. Die gezeigte, typische Palette 2 ist eine flache Tragvorrichtung aus Holz, die zum Stapeln von (nicht gezeigten) Waren und deren anschließendem Transport verwendet wird. Sie besteht aus längs verlaufenden Brettern 15, die auf Blöcke 16 genagelt sind. Zur Stabilisierung dienen außerdem zwei quer verlaufende Bretter 17, die jeweils an der Vorderseite und der Endseite der Palette 2 zwischen den Blöcken 16 und den Brettern 15 befestigt sind. Die Blöcke sind wiederum auf unteren, längs verlaufenden Brettern 15' angeordnet.

Wie Figur 2 zeigt, kann das Flurförderzeug 1 mit der Schubstange 11 unter die Palette 2 gefahren werden, weil der Zwischenraum 8 zwischen den beiden Auflageelementen 4 so bemessen ist, dass der mittlere Block 16' der Palette 2 zwischen den beiden Auflageelemente 4 passt.

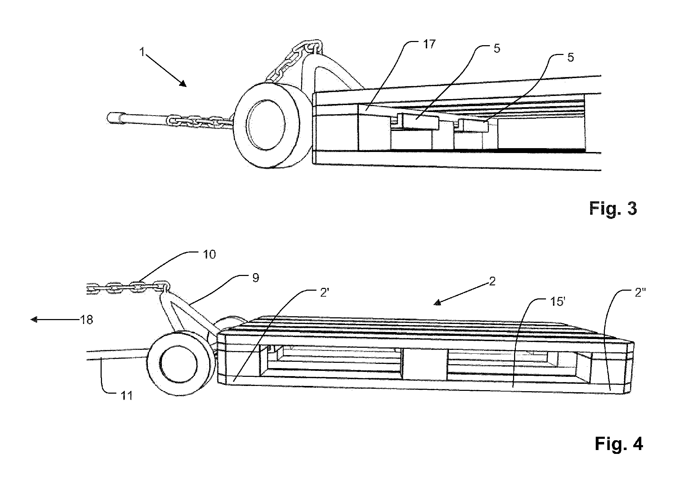

Figur 3 zeigt das Flurförderzeug 1 mit Palette 2 wie in Figur 2, aber in einer seitlichen Untersicht. Es ist dargestellt, dass die beiden Auflageelemente 4 mit ihrer Auflagefläche 14 der Unterseite des vorderen, Querbrettes 17 aufliegen. Die beiden Leisten 5 umgreifen dabei jeweils das Querbrett 17 formschlüssig. Die Länge der Auflageelemente 4 bzw. die Auflagefläche 14 ist so gewählt, dass diese etwas größer ist als die Breite des Querbrettes 17, damit die beiden Leisten 5 das Querbrett 17 an seiner Innenkante umgreifen können.

Figur 4 zeigt eine perspektivische Seitenansicht des Flurförderzeugs 1 mit angehobener Palette 2. Die Kette 10 ist im gespannten Zustand dargestellt, weil in der Kraftrichtung 18 gezogen wird, beispielsweise durch einen mit der Kette 10 verbundenen (nicht gezeigten) Gabelstapler. Die auf die in Kraftrichtung 18 bzw. in Richtung der Schubstange 11 geneigten Holme 9 üben auf die Achse 3 ein Drehmoment aus, so dass sich die die Achse 3 etwas gegen den Uhrzeigersinn dreht und damit die Auflageelemente 4 angehoben und mit Kraft gegen das Querbrett 17 gedrückt werden. Die Palette wird dadurch an der dem Flurförderzeug 1 zugewandten Seite 2' leicht angehoben. Die Leisten 5 verhaken sich außerdem fest mit dem Querbrett 17 der Palette 2.

Hierdurch liegt die Palette 2 nur mit ihrem hinteren Abschnitt 2" der unteren Bretter 15' auf dem Boden auf, wodurch sich beim Ziehen ein geringer Reibungswiderstand ergibt. Die Palette 2 kann nun mit dem Flurförderzeugs 1 an die gewünschte Position gezogen werden. Es können Paletten mit einem Gewicht bis zu 1000 kg sicher bewegt werden.

Durch die Erfindung ist ein kostengünstig herstellbares, aber sehr effizientes und nützliches Transportmittel für Paletten 2 vorgeschlagen.

### Bezugszeichenliste

- 1.: Flurförderzeug
- 2.: Palette
- 3.: Achse
- 4.: Auflageelemente
- 5.: Leiste
- 6.: Hebelvorrichtung
- 7.: Öse
- 8.: Zwischenraum
- 9.: Holme
- 10.: Kette
- 11.: Schubstange
- 12.: Räder
- 13.: Griff
- 14.: Auflagefläche
- 15.: Bretter
- 16.: Blöcke
- 17.: Querbretter
- 18.: Zugrichtung

## Patentansprüche

1. Flurförderzeug (1) für Paletten (2), das eine Achse (3) und mindestens ein Auflageelement (4) umfasst, welches an seinem vorderen, der Achse (3) abgewandten Ende eine Erhebung (5) aufweist, und das weiterhin eine Hebelvorrichtung (6) vorgesehen ist, welche ausgebildet ist, beim Anlegen einer Zugkraft das oder die Auflageelemente (4) nach oben und das Flurförderzeug (1) in Zugkraftrichtung (18) zu bewegen.

2. Flurförderzeug nach Anspruch 1, **dadurch gekennzeichnet, dass** die Hebelvorrichtung (6) mit ihrem einen Ende an der Achse (3) befestigt und an ihrem anderen Ende ein Befestigungsmittel (7) für eine Zugvorrichtung aufweist.

3. Flurförderzeug nach Anspruch 1 oder Anspruch 2, **dadurch gekennzeichnet, dass** an der Achse (3) zwei Räder (12) drehbar befestigt sind.

4. Flurförderzeug nach einem der vorhergehenden Ansprüche, **dadurch gekennzeichnet, dass** die Hebelvorrichtung (6) im Verhältnis zur Auflagefläche (14) eines Auflageelementes (4) einen Winkel aufweist, der mindestens 90 Grad, vorzugsweise größer als 90 Grad ist.

5. Flurförderzeug nach einem der vorhergehenden Ansprüche, **dadurch gekennzeichnet, dass** zwei durch einen Zwischenraum (8) beabstandete Auflageelemente (4) vorgesehen sind, die vorzugsweise an der Achse (3) befestigt sind.

6. Flurförderzeug nach einem der vorhergehenden Ansprüche, **dadurch gekennzeichnet, dass** die Erhebung (5) jeweils als parallel zu Achse (3) verlaufende Leiste (5) ausgebildet ist.

7. Flurförderzeug nach einem der vorhergehenden Ansprüche, **dadurch gekennzeichnet, dass** die Hebelvorrichtung (6) mindestens einen, vorzugsweise zwei Holme (9) umfasst, die vorzugsweise miteinander verbunden sind und mit der Achse (3) eine etwa dreieckige Form bilden.

8. Flurförderzeug nach einem der vorhergehenden Ansprüche, **dadurch gekennzeichnet, dass** als Befestigungsmittel (7) für die Zugvorrichtung (10) eine Öse (7) vorgesehen ist, die an dem der Achse (3) entgegengesetzten Ende der Hebelvorrichtung (6) befestigt ist.

9. Flurförderzeug nach einem der vorhergehenden Ansprüche, **dadurch gekennzeichnet, dass** an der Öse (7) als Zugvorrichtung (10) eine Kette (10) befestigt ist.

10. Flurförderzeug nach einem der vorhergehenden Ansprüche, **dadurch gekennzeichnet, dass** gegenüber den Auflageelementen (4) an der Achse (3) eine Schubstange (11) lösbar befestigt ist.
